# EUROPÄISCHE PATENTSCHRIFT

(11) **EP 2 917 706 B1**
(45) Veröffentlichungstag und Bekanntmachung des Hinweises auf die Patenterteilung: **20.07.2022**
(21) Anmeldenummer: 13788677.6
(22) Anmeldetag: 06.11.2013
(51) Int. Cl.: G01H 3/10

(54) **VERFAHREN ZUM ÜBERWACHEN EINER VIBRATIONSBELASTUNG UND PORTABLES GERÄT ZUR DURCHFÜHRUNG DES VERFAHRENS**
METHOD FOR MONITORING VIBRATIONAL LOADING AND PORTABLE DEVICE FOR CARRYING OUT THE METHOD
PROCÉDÉ DE SURVEILLANCE DE SOLLICITATIONS VIBRATOIRES ET APPAREIL PORTATIF POUR METTRE LEDIT PROCÉDÉ EN OEUVRE

(30) Priorität: 08.11.2012 DE 102012021838
(43) Veröffentlichungstag der Anmeldung: 16.09.2015
(73) Patentinhaber: BOMAG GmbH, 56154 Boppard (DE)
(72) Erfinder: KRINGS, Albertus, 56337 Kadenbach (DE); WINDECK, Dirk, 56206 Hilgert (DE)
(74) Vertreter: Heidler, Philipp
(86) Internationale Anmeldenummer: PCT/EP2013/003330
(87) Internationale Veröffentlichungsnummer: WO 2014/072044

(56) Entgegenhaltungen:
- EP-A2- 2 273 244
- EP-A2- 2 273 244
- WO-A2-2010/041059
- WO-A2-2010/041059
- JP-A- 2004 301 671

## Beschreibung

Die Erfindung betrifft ein Verfahren zum computergestützten Überwachen einer Vibrationsbelastung bei der Arbeit, sowie ein portables Gerät und eine Bearbeitungsmaschine zur Durchführung des Verfahrens. Vibrationen im vorliegenden Sinn sind mechanische Schwingungen, die auf einen Menschen einwirken und auf ihn übertragen werden. Vibrationen, Schwingungen und mechanische Schwingungen sind unterschiedliche Begriffe, die dasselbe beschreiben.

Vibrationen werden auf den Menschen zum Beispiel beim Fahren von Nutzfahrzeugen übertragen, wobei die Übertragung im Wesentlichen über den Sitz des Fahrzeugs auf das Gesäß des Fahrers erfolgt. Es handelt sich dabei um Ganz-Körper-Vibrationen (GKV). Ferner treten bei der Bedienung von Bearbeitungsmaschinen Vibrationsbelastungen auf das Hand-Arm-System eines Bedieners auf. Sie werden als Hand-Arm-Vibrationen (HAV) bezeichnet. Bei Straßenbaumaschinen, die eine hohe Vibrationsbelastung auf die Bedienperson ausüben, sind z.B. insbesondere Presslufthämmer und Baumaschinen zur Bodenverdichtung, wie insbesondere Stampfer, Walzen mit Vibrationsverdichtungseinrichtung und Vibrationsplatten, zu nennen.

Um das Wohl der Bedienpersonen sicherzustellen, existieren gesetzliche Bestimmungen, anhand derer die Bedienpersonen vor der Gefährdung durch die Hand-Arm-Vibrationen (HAV) und Ganz-Körper-Vibrationen (GKV) geschützt werden sollen. Die HAV werden von den Maschinen über die Handinnenflächen und die Finger in die Hände und Arme der Bedienperson übertragen. In Maschinen und Fahrzeugen werden die GKV auf die Bedienperson über die Sitze oder Füße übertragen und können nachhaltige Rückenbeschwerde verursachen. Relevante Bestimmungen sind beispielsweise unter "http://bb.osha.de/docs/EU-HAV-Handbuch.pdf" für HAV und unter "http://www.bmas.de/SharedDocs/Downloads/DE/PDF-Publikationen/c219-handbuch-ganzkoerpervibration.pdf" für GKV bekannt, die hiermit in Bezug genommen werden.

Es gibt bereits sogenannte Vibrationsrechner, beispielsweise unter "www.bomag.com/de/de/vibrations-rechner.htm". In solchen Vibrationsrechnern sind maschinenspezifische Vibrationswerte hinterlegt; es können solche maschinenspezifischen Vibrationswerte auch manuell eingegeben werden. In der letzten Variante können die maschinenspezifischen Vibrationswerte in Bedienungsanleitungen hinterlegt sein, die in Papierform der Maschine beigelegt sind. Ein maschinenspezifischer Belastungswert ist somit ein für die jeweilige Bearbeitungsmaschine im üblichen Betriebsfall vorliegender HAV- oder GKV-Vibrationsbelastungswert, wobei es auch vorgesehen sein kann, dass für unterschiedliche Betriebsbedingungen, beispielsweise Untergrundbeschaffenheiten bei Verdichtungsarbeiten, unterschiedliche maschinenspezifische Belastungswerte vorliegen. Bringt man diese maschinenspezifischen Vibrationswerte mit einer beabsichtigten Bedienzeit in Relation, so ergibt sich ein rechnerischer Vibrationsbelastungswert über die Vibrationsbelastung, der die Bedienperson während des geplanten Arbeitseinsatzes voraussichtlich ausgesetzt sein wird. Im Optimalfall wird vor dem Arbeitseinsatz eine solche Vibrationsberechnung durchgeführt, woraus dann die Bedienperson ermitteln kann, wie lange sie eine vibrierende Arbeitsmaschine bedienen darf. Der Nachteil liegt allerdings darin, dass eine solche Berechnung recht statisch ist und keine Veränderungen im Arbeitsablauf ohne Neuberechnung zulässt. Sollte sich beispielsweise der Arbeitsplan einer Bedienperson kurzfristig ändern, so müsste wieder eine neue Vibrationsberechnung erstellt werden. Insofern ist die bisher verwendete Vorausberechnung mit erheblichen Nachteilen behaftet.

Aus der EP 2 273 244 A2 ist ein Dosimeter bekannt, mit dem eine Vibrationserfassung für schlagende Handwerkzeugmaschinen möglich ist. Das dort beschriebene System ist komplex und greift unter anderem auf die Verwendung und das Auslesen von RFID-Codes zurück. Die WO 2010/041059 A2 offenbart ebenfalls eine Vibrationsmanagementeinrichtung, die zudem die Anzeige einer Benutzungsrestdauer anzeigt.

Es ist daher Aufgabe der vorliegenden Erfindung, ein verbessertes Verfahren zum Überwachen der Vibrationsbelastung bereitzustellen, welcher eine Bedienperson während der Bedienung einer Bearbeitungsmaschine ausgesetzt ist. Dieses Verfahren umfasst die folgenden Schritte:
- Ermitteln einer realen Bediendauer einer Bearbeitungsmaschine durch die Bedienperson;
- Abfragen eines maschinenspezifischen Belastungswertes, bezogen auf die verwendete Bearbeitungsmaschine, wobei hierzu eine an der Bearbeitungsmaschine in Form eines QR-Codes dargestellte Kennung fest angebracht ist, und wobei das Abfragen mittels eines portablen Geräts mit einer optoelektronischen Leseeinrichtung erfolgt;
- automatisiertes Berechnen der Vibrationsbelastung anhand der Bediendauer und des maschinenspezifischen Belastungswertes, wobei die Bedienperson vorzugsweise ein portables Gerät bei sich führt, welches die reale Bediendauer aufnimmt;
- Ausgeben eines Vibrationsbelastungswertes, der die bislang ausgesetzte Vibrationsbelastung widerspiegelt, oder eines davon abhängigen Wertes.

Bevorzugte Ausgestaltungen ergeben sich aus den Unteransprüchen.

Ferner wird die Erfindung durch ein portables Gerät gelöst, das zur Durchführung wenigstens eines, vorzugsweise mehrerer und idealerweise aller Schritte des erfindungsgemäßen Verfahrens ausgebildet ist, mit dem somit insbesondere die Bearbeitungsdauer im Rahmen des vorstehend beschriebenen Verfahrens aufgenommen wird und/oder mit dem eine an der Bearbeitungsmaschine fest angebrachte Kennung ermittelt und anschließend zum Erhalt eines maschinenspezifischen Belastungswertes decodiert wird. Eine Bearbeitungsmaschine mit einem QR-Code ist ebenfalls ein Aspekt der Erfindung.

Erfindungsgemäß wird die Vibrationsbelastung nun computergestützt überwacht, insbesondere in Echtzeit. So wird die reale Bearbeitungsdauer unter Verwendung einer Bearbeitungsmaschine ermittelt und in Relation mit einem maschinenspezifischen Belastungswert, bezogen auf die verwendete Baumaschine, gesetzt. Dazu wird dieser maschinenspezifische Belastungswert abgefragt. Dann erfolgt ein automatisiertes Berechnen der Vibrationsbelastung aus der Bearbeitungsdauer und des maschinenspezifischen Belastungswertes. Der Kern der Erfindung liegt darin, dass die Bedienperson ein portables Gerät bei sich führt, welches die reale Bearbeitungsdauer aufnimmt. Dann kann der Vibrationsbelastungswert, der die bislang aufgenommene Vibrationsbelastung widerspiegelt, insbesondere durch das portable Gerät, insbesondere quasi in Echtzeit, ausgegeben werden. Alternativ kann natürlich auch ein Wert ausgegeben werden, der von diesem Vibrationsbelastungswert abhängig ist, beispielsweise eine Restlaufzeit. Die Restlaufzeit kann angeben, wie lange unter gleichbleibenden Bedingungen noch gearbeitet werden kann, bis die Bedienperson einer maximal zulässigen Vibrationsbelastung ausgesetzt sein wird. Ein solcher Prognosewert berücksichtigt natürlich die bereits aufgenommene Vibrationsbelastung durch die Bedienperson.

Das portable Gerät führt die Bedienperson während der Bedienung der Maschine vorzugsweise stets mit sich mit. Dadurch kann das portable Gerät stets in Kenntnis darüber sein, wie lange bereits unter einer Vibrationsbelastung gearbeitet wurde. Um den Vibrationsbelastungswert zu ermitteln, ist es allerdings erforderlich, dass der maschinenspezifische Belastungswert bekannt ist. Dafür kann das portable Gerät selbst in einer internen Datenbank die maschinenspezifischen Belastungswerte von einigen Maschinen abgespeichert haben und entsprechend abrufen; der Belastungswert kann allerdings auch über eine Datenfernverbindung von einer zentralen Datenbank abgefragt werden.

Die reale Bearbeitungsdauer kann vorzugsweise durch Nutzereingaben aufgenommen werden. Dabei kann die Bedienperson beispielsweise eine Eingabe an dem portablen Gerät tätigen, wenn die Bearbeitung beginnt, wenn die Bedienperson die Bearbeitung beendet, kann sie eine weitere Eingabe tätigen und dies dem Gerät damit mitteilen. Dieses Verfahren gleicht im Wesentlichen der Bedienung einer Stoppuhr. Ein solches Verfahren ist allerdings anfällig gegen Fehlbedienungen, so dass es bevorzugt ist, dass die Aufnahme der Bediendauer automatisch erfolgt.

Für die automatische Aufnahme der Bediendauer ist vorzugsweise vorgesehen, dass Auswertungen von Messwerten eines Vibrationssensors erfolgen, welcher vorzugsweise an der Bedienperson angebracht ist. Der Vibrationssensor kann auch an der Maschine angebracht sein. Der Vibrationssensor kann also selbstständig ermitteln, wann eine Vibration startet, wodurch der Startzeitpunkt erkannt werden kann. Entsprechend kann auch der Endzeitpunkt der Bediendauer durch den Vibrationssensor erkannt werden. Unter einem Vibrationssensor sind im Wesentlichen alle Sensoren zu verstehen, welche die oszillierenden Bewegungen, die durch Vibration entstehen, detektieren, insbesondere auch sogenannte Beschleunigungssensoren.

Alternativ kann die Maschine selbst an das portable Gerät ein Bediensignal ausgeben, welches Angaben über die Bediendauer enthält. Dafür kann an der Maschine eine Funkeinheit vorgesehen sein, welche drahtlos z.B. ein Startsignal und ein Endsignal abgibt. Das Signal kann dann von dem portablen Gerät aufgefangen und ausgewertet werden. Ferner oder alternativ kann das portable Gerät ein Freigabesignal an die Maschine über eine solche Funkverbindung ausgeben, solange die maximale Vibrationsbelastung noch nicht erreicht wurde. Nur bei Vorliegen eines solchen Freigabesignals kann dann die Maschine in Betrieb genommen werden oder wenn eine Warnung von der Maschine an den Bediener ausgegeben wurde.

An der Maschine ist erfindungsgemäß eine Kennung in Form eines QR-Codes angebracht, der den maschinenspezifischen Belastungswert zumindest mittelbar in sich trägt. So kann beispielsweise das portable Gerät diese Kennung detektieren und daraus einen maschinenspezifischen Belastungswert ermitteln. Hier sind der Art und Weise, wie die Kennung an der Maschine angebracht sein kann, keine Grenzen gesetzt, solange die Kennung in irgendeiner Form durch das portable Gerät erkannt werden kann. Eine Eingabe durch die Bedienperson, die möglicherweise fehlerbehaftet sein kann, entfällt. Erfahrungsgemäß einer speziellen Ausgestaltung ist der Code ein QR-Code. Beispielsweise kann der Code ein QR-Code, Micro-QR-Code, Secure-QR-Code oder iQR-Code sein. Der QR-Code (eingetragene Marke, englisch: Quick Response) ist ein zweidimensionaler Code und basiert auf einer quadratischen Matrix. Bei dem QR-Code sind die damit codierten Daten durch einen Fehler-korrigierenden Code geschützt, wodurch der QR-Code vorteilhafterweise selbst bei einem Verlust von bis zu 30 % des Codes noch decodiert werden kann.

Wichtig ist dabei ferner, dass die Kennung im Wesentlichen fest mit der Maschine verbunden ist. Dies kann beispielsweise durch einen entsprechenden Aufkleber oder dergleichen erfolgen. Die Kennung ist ferner vorzugsweise gegen Beschädigung geschützt, beispielsweise durch kratzfeste Beschichtungen und/oder durch entsprechende Abdeckeinrichtungen, wie Klappen oder dergleichen. Ferner sind Stellen bevorzugt, die einerseits gut zugänglich sind und andererseits durch den Arbeitsbetrieb nur wenig beeinträchtigt werden. Optimal sind daher insbesondere Stellen im Bereich des Fahrstandes oder des Führungsbügels der Maschine oder vom Bodenuntergrund weg gerichtete Bereiche des Maschinenrahmens, Motorabdeckungen etc. Baumaschinen können ohne Weiteres mit einer solchen Kennung nachgerüstet werden.

Das portable Gerät weist Sensormittel auf, welche die Kennung erkennen können, wie eine Kamera zum Aufnehmen des QR-Codes, einen geeigneten Scanner oder vergleichbare optoelektronische Leseeinrichtungen. Ferner umfasst das portable Gerät idealerweise eine Steuereinheit, über die eine Entschlüsselung der Kennung und idealerweise auch eine Berechnung der HAV/GKV-Belastung über die Zeit möglich ist. Konkret kann hierzu beispielsweise ein Smartphone oder ein ähnliches mobiles Gerät verwendet werden. Mittels eines geeigneten Anwendungsprogramms, beispielsweise einer App, können von dem durch den QR-Code codierte Informationen, seien es unmittelbare Wertvorgaben oder per entsprechenden Internet-Link verfügbare Informationen abgefragt werden. Ein entsprechendes Anwendungsprogramm wird zweckmäßig auf dem mobilen Gerät vorinstalliert, um das erfindungsgemäße Verfahren anwenden zu können.

In einer bevorzugten Ausgestaltung ist der Ausgabewert ein Prognosewert, der Angaben über die verbleibende Bearbeitungsdauer bis zum Erreichen der maximal zulässigen Vibrationsbelastung enthält. Ein solcher Prognosewert kann beispielsweise eine Prozentangabe über die bereits aufgenommene oder noch aufnehmbare Vibrationsbelastung sein. So kann beispielsweise durch eine Sprachausgabe die Zahl "70 %" ausgegeben werden; die Bedienperson weiß dann, dass sie bereits 70 % der Vibrationsbelastung, die sie an diesem Tag aufnehmen kann, aufgenommen hat, so dass noch 30 % verbleiben. Der Prognosewert kann auch "5 Minuten" lauten, die zulässige Restbearbeitungszeit beträgt demnach noch 5 Minuten.

Die Vibrationsbelastungen, die während der Bearbeitung mit unterschiedlichen Bearbeitungsmaschinen innerhalb eines gewissen Zeitraumes entstehen, werden vorzugsweise zu einem Gesamtbelastungswert aufsummiert. So können ohne Weiteres die Vibrationsbelastungen berücksichtigt werden, die durch Bedienungen von Maschinen mit unterschiedlichen Vibrationscharakteristiken entstanden sind. Das Verfahren kann damit flexibel auf wechselnde Arbeitseinsätze reagieren und dennoch die korrekte Vibrationsbelastung einhalten.

Vorzugsweise ist das portable Gerät zumindest zeitweise in Datenverbindung mit einer zentralen Datenverarbeitungseinheit, insbesondere auch über das Internet. Dies dient dem Datenaustausch beziehungsweise dem Aktualisieren von Daten in dem portablen Gerät. So kann das portable Gerät z.B. die maschinenspezifischen Belastungswerte einer speziellen Maschine abfragen, um die Vibrationsbelastung errechnen zu können. Alternativ oder in Kombination dazu können Vibrationsbelastungswerte betreffend eine Bedienperson zentral abgespeichert werden, insbesondere für eine spätere Auswertung. Ferner alternativ oder in Kombination können auch lediglich die Bediendauerwerte, gegebenenfalls in Kombination mit der Kennung der Bearbeitungsmaschine, an den zentralen Rechner übersendet werden; die eigentliche Berechnung der Vibrationsbelastung kann in diesem Fall vom zentralen Rechner durchgeführt werden, der dann den Vibrationsbelastungswert oder den davon abhängigen Wert wieder an das portable Gerät und damit an die Bedienperson weiterleiten kann.

Das portable Gerät kann als Applikation auf einem Mobiltelefon ausgeführt sein, zumal heutige Mobiltelefone bereits über die erforderlichen Eigenschaften (Kamera, Beschleunigungssensor, Internetverbindung, ...) verfügen.

Beispielhaft sei das Verfahren nachfolgend kurz skizziert. Eine Bedienperson erscheint morgens auf der Baustelle und erkundigt sich nach den geplanten Arbeitseinsätzen. Die Bedienperson übernimmt das portable Gerät und setzt durch Drücken einer Reset-Taste die Vibrationsbelastung auf NULL. Das portable Gerät wird idealerweise am Handgelenk wie eine Armbanduhr befestigt, da insbesondere bei handgeführten Bearbeitungsmaschinen an dieser Stelle der Schwingungseintrag in die Bedienperson erfolgt.

Die Bedienperson wendet sich nun einer ersten Bearbeitungsmaschine zu und meldet sich durch Scannen des dort angebrachten QR-Codes mit dem portablen Gerät bei dieser Maschine an. Nun beginnt die Bearbeitung. Dabei erkennt ein im portablen Gerät integrierter Beschleunigungssensor die auf das Handgelenk übertragenen Vibrationen und stellt somit den Startzeitpunkt der Bearbeitung fest. Die Dauer der Bearbeitung wird nun so lange erkannt, solange die Vibrationen von dem Sensor registriert werden. Nach ca. einer Bearbeitungszeit von 2 Stunden gibt das portable Gerät ein Vibrationssignal aus, das die Bedienperson auf das Display aufmerksam macht. Dort steht zum Beispiel, dass noch 10 Minuten weitergearbeitet werden darf, bis die maximale Tagesdosis an HAV aufgenommen wurde. Nach den 10 Minuten erscheint wieder ein Vibrationssignal, welches dann allerdings stärker ausgebildet ist und unangenehm für die Bedienperson ist. Damit soll die Bedienperson dazu gezwungen werden, die Arbeiten einzustellen.

Alternativ kann das portable Gerät auch in Funkverbindung mit der Maschine sein. So gibt die Maschine ein Signal aus, während die Bedienung der Maschine stattfindet. Das portable Gerät nimmt das Signal auf und summiert nun die Bearbeitungsdauer auf. Im Gegenzug wird das portable Gerät auch ein Freigabesignal an die Maschine ausgeben. Damit wird die Maschine in Kenntnis darüber gesetzt, dass die Bedienperson noch über "freie Bearbeitungszeit" verfügt. Sollte die maximale Tagesbelastung dann erreicht werden, so wird das Freigabesignal eingestellt oder ein Sperrsignal an die Maschine ausgegeben, worauf die Maschine den Betrieb automatisch einstellt.

Abhängig vom Betriebsmodus einer Maschine können unterschiedliche mechanische Schwingungen auftreten, die entsprechend unterschiedliche Vibrationsbelastungen auf den Bediener verursachen. So ändern sich beispielsweise die belastenden Schwingungsfrequenzen und -Amplituden mit der Drehzahl eines Motors sowie mit der Geschwindigkeit oder Beschleunigung einer Maschine. Ebenso ändert sich die Vibrationsbelastung beispielsweise mit der Schlagzahl und der Schlagkraft einer stampfenden Maschine. In der Regel können diese Maschinen mit variablen Betriebsgrößen betrieben werden, beispielsweise durch Umschalten oder Verändern der Arbeitsgeschwindigkeit, der Drehzahl, der Arbeitsfrequenz u.ä.

Eine weitere Ausführung der Erfindung besteht darin, dass bei Erreichen einer vorgegebenen HAV-Belastung und/oder GKV-Belastung des Bedieners unterhalb des Gesamtbelastungswertes der Betriebszustand der betreffenden Maschine in der Weise verändert wird, dass die belastenden Vibrationen verringert werden. Bevorzugt wird die Arbeitsgeschwindigkeit, die Drehzahl oder die Arbeitsfrequenz einer Maschine oder eines Werkzeuges heruntergefahren. Dies kann kontinuierlich oder stufenweise erfolgen.

Die Änderung des Betriebsverhaltens hin zu weniger belastenden Vibrationen kann irreversibel erfolgen, so dass die Bedienperson den vorhergehenden Betriebszustand nicht wiederherstellen kann, solange sich die HAV-Belastung und/oder GKV-Belastung weiter dem kritischen Gesamtbelastungswert nähert. Die Bedienperson wird somit nur noch einer verminderten Belastung ausgesetzt.

Die Veränderung des Betriebszustandes abhängig von einem vorgegebenen Grenzwert der HAV-Belastung und/oder GKV-Belastung kann vorteilhafterweise auch nur für eine vorgegebene kurze Zeitspanne erfolgen, um die Bedienperson auf das baldige Erreichen der Höchstbelastung aufmerksam zu machen. Die Bedienperson nimmt dann den Wechsel der Betriebsgrößen als Signal dafür, dass die zulässige Arbeitszeit bald erreicht wird.

Die vorliegende Erfindung wird unter Bezugnahme auf die angehängten Zeichnungen näher erläutert. Die Zeichnungen beschreiben rein beispielhaft bevorzugte Ausführungsformen der Erfindung, ohne auf diese beschränkt zu sein, und sind lediglich schematisch. In den Figuren, in denen gleiche Bezugszeichen gleiche Teile bezeichnen, zeigen
- Fig. 1: eine Seitenansicht auf eine Bearbeitungsmaschine in Form einer Rüttelplatte;
- Fig. 2: eine Seitenansicht auf eine Bearbeitungsmaschine in Form eines Vibrationsstampfers;
- Fig. 3: eine Seitenansicht auf eine Bearbeitungsmaschine in Form einer Tandemwalze;
- Fig. 4: ein portables Gerät zur Durchführung eines erfindungsgemäßen Verfahrens; und
- Fig. 5: ein Ablaufschema zur Durchführung eines erfindungsgemäßen Verfahrens.

Gleiche Bauteile sind in den Figuren mit gleichen Bezugszeichen angegeben. Sich wiederholende Bauteile sind dabei nicht zwingend in jeder Figur einzeln gekennzeichnet.

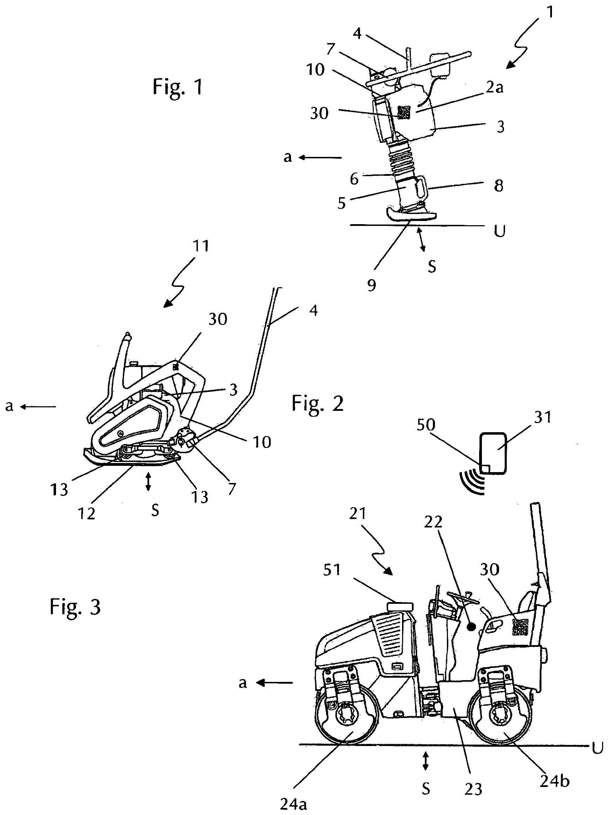

Fig. 1 zeigt eine Bearbeitungsmaschine, konkret eine handgeführte Bodenverdichtungsmaschine in Form eines Vibrationsstampfers 1, umfassend einen Oberbau 2a mit einem Antriebsmotor 3 und einem Führungsbügel 4, und mit einem Unterbau 2b mit einem Stampffuß 5 mit einer Bodenplatte 9 und einem Transportgriff 8. Der Unterbau 2b ist über einen Balg 6 mit dem Oberbau 2a verbunden. Der Führungsbügel 4 und der Antriebsmotor 3 sind mittelbar über einen Maschinenrahmen 10 beziehungsweise eine Verbindungskonsole 10 miteinander verbunden. Innerhalb des Balgs 6 ist eine Kraftübertragungsvorrichtung, beispielsweise eine Pleuelstange, angeordnet, die die rotatorische Antriebskraft des Antriebsmotors 3 in bekannter Weise in eine Linearbewegung umsetzt und auf den Stampffuß 5 überträgt. Zwischen dem Antriebsmotor 3 und dem Stampffuß 5 ist insgesamt somit ein nicht näher bezeichnetes und an sich bekanntes Antriebsgetriebe vorhanden, über das die Antriebsenergie des Antriebsmotors 3 an den Stampffuß 5 übertragen wird. Im Betrieb stampft der Stampffuß 5 annähernd in Vertikalrichtung entlang der Stampfachse S, beispielsweise mit einer Frequenz von etwa 10 Hz, über den Bodenuntergrund U und verdichtet dabei das Untergrundmaterial. Die Führung des Vibrationsstampfers 1 erfolgt manuell über den Führungsbügel 4, der über elastische Dämpfungslager 7 am Maschinenrahmen des Oberbaus 2a gelagert ist. Die Hauptarbeitsrichtung a ist diejenige Bewegungsrichtung des Vibrationsstampfers im Arbeitsbetrieb, in die die Stampfachse S nach vorn gegenüber der Bodenhorizontalebene geneigt ist und in die er sich selbsttätig im Arbeitsbetrieb fortbewegt. Im Arbeitsbetrieb werden trotz der Dämpfung 7 erhebliche Vibrationen über den Führungsbügel 4 an den Bediener des Vibrationsstampfers 1 übertragen.

Eine weitere Bearbeitungsmaschine, konkret eine handgeführte Bodenverdichtungsmaschine in Form einer Rüttelplatte 11, ist in ihrem prinzipiellen Aufbau in Fig. 2 weiter veranschaulicht. Die Rüttelplatte 11 umfasst eine Bodenplatte 12, auf der ein vom Antriebsmotor 3 über ein nicht weiter dargestelltes und an sich bekanntes Zugmittelgetriebe angetriebenes Erregeraggregat angeordnet ist, das die Bodenplatte 12 im Betrieb in Schwingungen S, insbesondere zumindest anteilig in Vertikalrichtung, versetzt. Der Antriebsmotor ist auf dem Maschinenrahmen 10 angeordnet, der gegenüber der Bodenplatte 12 über Dämpfungselemente 13 schwingungsgedämpft ist. Ferner ist auch hier ein Führungsbügel 4 am Maschinenrahmen 10 angelenkt, der über die Dämpfungslager 7 schwingungsgedämpft gelagert ist.

Beide Maschinen der Figuren 1 und 2 werden den sogenannten "Walk-Behind-Maschinen" zugeordnet, deren übergeordnetes gemeinsames Merkmal darin liegt, dass der Maschinenbediener im Arbeitsbetrieb hinter der Maschine herlaufend die Bodenverdichtungsmaschine führt. Entsprechend ist die Hauptarbeitsrichtung a auch die Fortbewegungsrichtung, die dem von der Maschine abstehenden Bereich des Führungsbügels 4 gegenüberliegt. Durch diese Handführung werden erhebliche Schwingungen im Arbeitsbetrieb über den Führungsbügel 4 auf die Finger und Hände und respektive den Maschinenbediener übertragen. Diese HAV-Vibrationsbelastung darf ein durch entsprechende Behörden festgelegtes Maximum in Abhängigkeit von der Vibrationsintensität und der Betriebsdauer nicht überschreiten. Die jeweils am Führungsbügel übertragenen Vibrationen variieren erheblich zwischen den einzelnen Maschinen und zum Teil auch den jeweiligen Einsatzbedingungen.

Fig. 3 schließlich betrifft eine weitere Bearbeitungsmaschine, konkret eine durch einen auf einem Fahrstand 22 sitzenden mitfahrenden Maschinenbediener Tandemwalze 21. Diese umfasst einen knickgelenkten Maschinenrahmen 23, an dem zwei Verdichtungsbandagen 24a und 24b gelagert sind. Die Verdichtungsbandagen 24a und 24b umfassen jeweils eine innenliegende Vibrationseinrichtung, mit der Schwingungen zumindest anteilig in Pfeilrichtung S auf den Bodenuntergrund übertragen werden können. Dadurch vibriert die gesamte Maschine, so dass trotz entsprechender Dämpfungsmaßnahmen auch GKV-Schwingungen auf den auf dem Fahrstand 22 sitzenden Maschinenbediener übertragen werden. Auch das Ausmaß und die Intensität dieser Schwingungen hängen wesentlich von der jeweiligen Maschine und unter Umständen zudem auch von den jeweiligen Arbeitsbedingungen ab. Auch die GKV-Vibrationsbelastung darf ein durch entsprechende Behörden festgelegtes Maximum in Abhängigkeit von der Vibrationsintensität und der Betriebsdauer nicht überschreiten.

Die Bearbeitungsmaschinen 1, 11 und 21 der Figuren 1 bis 3 weisen jeweils einen fest an ihnen angebrachten QR-Code 30, an einer Stelle auf ihrer Außenoberfläche auf. Die Anbringungsstelle ist dabei jeweils in einem zum Bodenuntergrund möglichst weit beabstandeten Bereich angebracht, um eine Zerstörung oder Beschädigung des Codes im Arbeitsprozess möglichst zu vermeiden. Selbstverständlich kann hier beispielsweise auf kratzfeste Materialien und/oder auf zusätzliche Schutzeinrichtungen, wie beispielsweise Abdeckfolien und/oder Schutzhauben/-klappen etc. zurückgegriffen werden. Der QR-Code 30 codiert maschinenspezifische Belastungswerte, konkret HAV- (für die Maschinen 1 und 11) oder GKV-Belastungswerte (für die Maschine 21). Mit diesen Belastungswerten ist eine rechnerische Ermittlung der Gesamtbelastung über die Zeit, sei es nun zurückliegend oder in die Zukunft gerichtet, möglich.

Bei dem QR-Code 30 handelt es sich somit um einen zweidimensionalen Code. Dieser codiert entweder direkt maschinenspezifische HAV/GKV-Belastungswerte zur Verwendung in einem nachstehend noch näher beschriebenen Verfahren oder einen Internet-Link, über den entsprechende HAV/GKV-Belastungswerte abrufbar sind.

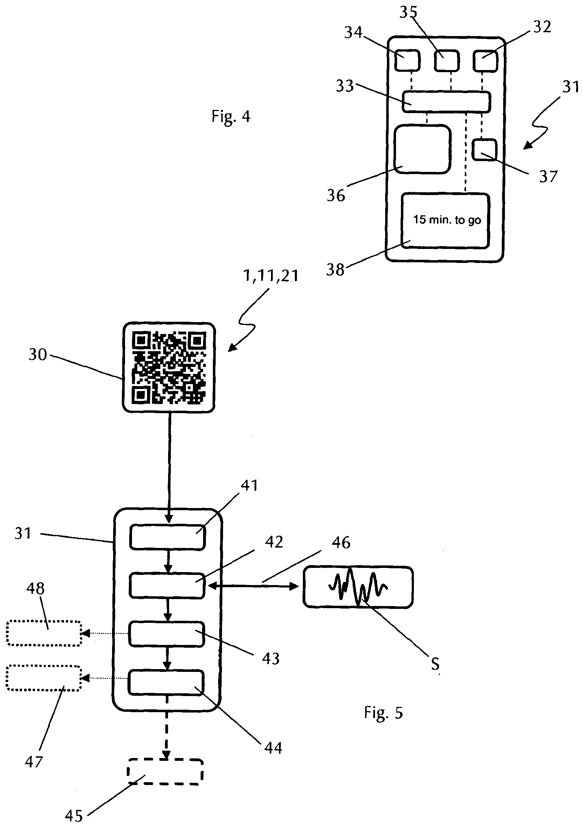

Fig. 4 veranschaulicht wesentliche Elemente eines beispielhaften portablen Geräts 31 zur Verwendung in einem erfindungsgemäßen Verfahren. Das portable Gerät 31 umfasst eine optoelektronische Leseeinrichtung 32, eine Steuereinheit 33, eine Einrichtung 34 zur kabellosen Verbindung mit dem Internet, einen Beschleunigungssensor 35, eine Eingabeeinrichtung 36, eine Einrichtung 37 zur Ausgabe akustischer Signale sowie eine Anzeigeeinrichtung 38, beispielsweise ein Display. Insgesamt handelt es sich bei dem portablen Gerät 31 vorzugsweise um eine Smartphone und/oder eine um das Handgelenk tragbare Einrichtung. Die Leseeinrichtung 32 ist zur Erkennung der Kennung, im vorliegenden Ausführungsbeispiel des QR-Codes 30, ausgebildet und kann beispielsweise eine entsprechend ausgebildete Digitalkamera sein. Die Steuereinheit 33 ist zur Decodierung des QR-Codes 30 und zur Berechnung der HAV/GKV-Belastung ausgebildet. Der Beschleunigungssensor 35 ist vorzugsweise zur Erkennung von Beschleunigungen in drei räumlichen und idealerweise zueinander senkrechten Richtungen ausgebildet. Die Eingabeeinrichtung kann eine Tastatur oder, zusammen mit der Anzeigeeinrichtung 38, ein Touchscreen sein. Die Einrichtung 37 ist beispielsweise ein Lautsprecher.

Die Steuereinheit 33 ist beim vorliegenden Ausführungsbeispiel in der Weise ausgebildet, dass sie den Arbeitsbeginn und die Arbeitsdauer anhand auftretender charakteristischer Vibrationen am Bediener erkennt. Ergänzend oder alternativ kann der Bediener allerdings auch manuell den Arbeitsbeginn festlegen. Die Steuereinheit 33 ermittelt in Echtzeit die am Bediener aufgetretenen HAV/GKV-Belastungen (je nach im Arbeitsbetrieb befindlicher Maschine) und gibt im vorliegenden Ausführungsbeispiel beispielsweise die noch verbleibende Arbeitszeit "15 min. to go" bis zum Erreichen zur zulässigen Gesamtbelastung an.

In Fig. 5 ist der Ablauf des Verfahrens näher beschrieben. Wesentliche Komponenten zur Durchführung dieser Verfahrensvariante der Erfindung sind einerseits das portable Gerät 31 und der auf einer Bearbeitungsmaschine 1, 11, 21 angebrachte QR-Code 30, mit dem für die jeweilige Bearbeitungsmaschine 1, 11, 21 spezifische HAV/GKV-Belastungswerte entweder direkt oder per entsprechendem Internetlink codiert sind. Zu Beginn des Arbeitsprozesses scannt der Bediener mit der Einrichtung 32 des portablen Geräts 31 im Schritt 41 den an der Bearbeitungsmaschine 1, 11, 21 angebrachten QR-Code 30 ab. Die Steuereinheit 33 erhält dadurch Informationen über die der entsprechenden Bearbeitungsmaschine 1, 11, 21 eigenen HAV- oder GKV-Belastungswerte (direkt oder per Upload über das Internet mit Hilfe der Einrichtung 34). Das portable Gerät 31 trägt der Bediener anschließend am Körper, idealerweise am Handgelenk. Mit Aufnahme des Arbeitsprozesses treten durch HAV- oder GKV-Übertragungen von der Maschine zum Bediener am Bediener für den Arbeitsprozess charakteristische Schwingungen gemäß Schritt 46 auf. Diese werden durch den Beschleunigungssensor 35 des portablen Geräts 31 gemäß Schritt 42 registriert und von der Steuereinheit 33 als solche identifiziert. Damit startet eine Zeiterfassung des Arbeitsprozesses durch die Steuereinheit 33. Alternativ kann dieser Vorgang selbstverständlich auch manuell am portablen Gerät 31 durch den Bediener ausgelöst werden. Mit dem Beginn der Zeiterfassung erfolgt nun gemäß Schritt 43 ein automatisiertes Berechnen der HAV-/GKV-Vibrationsbelastung des Bedieners anhand der Bediendauer und des im Schritt 41 ermittel-ten spezifischen Belastungswertes der Bearbeitungsmaschine 1, 11, 21 in Echtzeit durch die Steuereinheit 33, entweder kontinuierlich oder intervallartig. Dies kann im einfachsten Fall beispielsweise durch eine Multiplikation des maschinenspezifischen Belastungswertes mit der erfolgten Arbeitszeit in bekannter Weise geschehen. Im Schritt 44 erfolgt schließlich das Ausgeben eines Gesamtvibrationsbelastungswertes, der die Vibrationsbelastung widerspiegelt, der der Bediener bislang ausgesetzt war. Dies kann der konkret ermittelte Gesamtbelastungswert sein oder ein davon abhängiger Wert, wie insbesondere beispielsweise einer verbleibenden Restarbeitszeit etc.

Vorzugsweise ist die Steuereinheit 33 des portablen Geräts 31 in der Weise ausgebildet, dass sie bei Überschreiten vorher festgelegter Schwellenwerte einen Alarm, insbesondere einen taktilen Alarm, beispielsweise einen Vibrationsalarm, und/oder einen akustischen Alarm über die Lautsprecher 37 ausgibt, um den Bediener auf das Überschreiten des jeweiligen Schwellenwertes hinzuweisen. Ein solcher Schwellenwert kann beispielsweise das Erreichen einer bestimmten maximalen Gesamtvibrationsbelastung oder eines Bruchteils davon sein, beispielsweise 80%. Denkbar sind hier auch mehrere Schwellenwerte, um den Bediener schrittweise und rechtzeitig vor dem Erreichen des maximalen Gesamtvibrationsbelastungswertes zu informieren. Ergänzend oder alternativ sind auch Hinweise über das Display und/oder die Auslösung optischer Signaleinrichtung, beispielsweise eines Blinklichts, möglich. In Fig. 4 ist dazu beispielsweise die Einblendung einer Textnachricht vorgesehen, die den Bediener darauf hinweist, dass er unter den aktuellen Arbeitsbedingungen noch fünfzehn Minuten bis zum Erreichen der maximalen HAV/GKV-Belastung weiter arbeiten kann. In Fig. 5 ist das Ausgeben entsprechender Hinweise, sei es akustisch, optisch oder taktil, übergreifend mit dem Schritt 45 angegeben.

Es kann ferner auch eine Kopplung der Bearbeitungsmaschine 1, 11, 21 und dem portablen Gerät 31 in der Weise vorgesehen sein, dass das portable Gerät 31 den Arbeitsmodus der Bearbeitungsmaschine 1, 11, 21 in Abhängigkeit von der aktuell ermittelten HAV/GKV-Gesamtbelastung beeinflusst. Konkret kann dazu beispielsweise eine Funkverbindung zwischen dem portablen Gerät 31 und der Bearbeitungsmaschine 1, 11, 21 vorgesehen sein, wobei das portable Gerät 31 Steuerbefehle an die Bearbeitungsmaschine 1, 11, 21 übermittelt. Ein solcher Aufbau ist beispielhaft in Fig. 3 näher veranschaulicht. Dort weist das portable Gerät 31 ergänzend einen entsprechenden Funksender 50 und das Bearbeitungsgerät eine geeignete Maschinensteuereinheit mit Funkempfänger 51auf. Konkret ist nun vorgesehen, dass die Steuereinheit 33 des portablen Geräts 31 bei Erreichen der maximalen Gesamt-HAV/GKV-Belastung einen Arbeitsstoppbefehl an das Bearbeitungsgerät 21 übersendet, der zumindest das Deaktivieren der Vibrationseinrichtungen des Bearbeitungsgerätes 21 bewirkt. Der Bediener kann dann die Maschine noch bewegen, allerdings kann er nicht mehr den Vibrationsmodus der Maschine aktivieren. Dies ist durch den Schritt 48 angegeben. Ergänzend oder alternativ kann über die Funkverbindung auch eine Verlangsamung des Bearbeitungsgerätes 21 und/oder die Auslösung einer an der Maschine angebrachten Hinweiseinrichtung, beispielsweise einer Hupe und/oder optischer Signaleinrichtungen, erfolgen.

Das insbesondere in den Figuren 4 und 5 veranschaulichte System erlaubt schließlich auch eine maschinen- und/oder bedienerspezifische Dokumentation der aufgetretenen HAV/GKV-Belastungen. Hierzu kann es vorgesehen sein, dass beispielsweise per Internet-Uplink Betriebsintervalle hochgeladen und bestimmten Maschinen und/oder Bedienern in einer geeigneten Datenbank zugeordnet werden. Auf diese Weise kann insbesondere sichergestellt werden, dass einzelne Bediener auch bei einer Nutzung verschiedener HAV/GKV-relevanter Maschinen, beispielsweise der Maschinen 1, 11 und 21 einen durch verschiedene maschinenspezifischen Belastungswerte aufsummierten HAV/GKV-Gesämtbelastungswert in ihrer täglichen Arbeit nicht überschreiten. Dies ist in Fig. 5 durch den Schritt 47 angegeben.

Grundsätzlich ist es ferner möglich, dass die einzelnen Operationen mit verschiedenen Geräten durchgeführt werden. Ideal ist es allerdings, wenn das portable Gerät 31 in der Weise ausgebildet ist, dass insbesondere die Schritte 41 bis 44 und vorzugsweise auch die Schritte 45 und/oder 47 und/oder 48 durch das portable Gerät 31 selbst ausgeführt werden.

## Patentansprüche

1. Verfahren zum computergestützten Überwachen einer Vibrationsbelastung, welcher eine Bedienperson während der Bedienung einer Bearbeitungsmaschine ausgesetzt ist, umfassend die folgenden Verfahrensschritte:
a) Ermitteln einer realen Bediendauer einer Bearbeitungsmaschine durch die Bedienperson,
b) Abfragen eines maschinenspezifischen Belastungswertes, bezogen auf die verwendete Bearbeitungsmaschine, wobei hierzu eine an der Bearbeitungsmaschine in Form eines QR-Codes dargestellte Kennung fest angebracht ist, wobei das Abfragen mittels eines portablen Geräts mit einer optoelektronischen Leseeinrichtung erfolgt,
c) automatisiertes Berechnen der Vibrationsbelastung anhand der Bediendauer und des maschinenspezifischen Belastungswertes,
d) Ausgeben eines Vibrationsbelastungswertes, der die bislang ausgesetzte Vibrationsbelastung widerspiegelt, oder eines davon abhängigen Wertes.

2. Verfahren nach Anspruch 1,
**dadurch gekennzeichnet,**
**dass** die Schritte a) bis d) mit Hilfe eines einzigen portablen Geräts durchgeführt werden.

3. Verfahren nach einem der vorhergehenden Ansprüche,
**dadurch gekennzeichnet,**
**dass** die reale Bediendauer durch Nutzereingaben, insbesondere durch eine Nutzereingabe am Startzeitpunkt und/oder Endzeitpunkt der Bearbeitung, aufgenommen wird.

4. Verfahren nach einem der Ansprüche 1 oder 2,
**dadurch gekennzeichnet,**
**dass** die reale Bearbeitungsdauer automatisch durch das portable Gerät aufgenommen wird, insbesondere anhand von Auswertungen von Messwerten eines an der Bedienperson oder der Bearbeitungsmaschine angebrachten Vibrationssensors.

5. Verfahren nach einem der vorherigen Ansprüche,
**dadurch gekennzeichnet,**
**dass** die Bearbeitungsmaschine, insbesondere drahtlos, dynamische Werte, insbesondere Angaben über die Bediendauer wie den Startzeitpunkt und/oder Endzeitpunkt, an das portable Gerät überträgt.

6. Verfahren nach einem der vorherigen Ansprüche,
**dadurch gekennzeichnet,**
**dass** das portable Gerät ein Freigabesignal an die Bearbeitungsmaschine übermittelt, solange ein maximaler Vibrationsbelastungswert noch nicht erreicht ist, wobei ausschließlich bei Erkennung des Freigabesignals eine Bearbeitung mit der Bearbeitungsmaschine möglich ist.

7. Verfahren nach einem der vorherigen Ansprüche,
**dadurch gekennzeichnet,**
**dass** der ausgegebene Wert ein Prognosewert ist, der Angaben über die verbleibende Bediendauer bis zum Erreichen der maximal zulässigen Vibrationsbelastung enthält.

8. Verfahren nach einem der vorherigen Ansprüche,
**dadurch gekennzeichnet,**
**dass** Vibrationsbelastungen, die während der Bearbeitung mit unterschiedlichen Bearbeitungsmaschinen entstehen, zu einem Gesamtbelastungswert aufsummiert werden.

9. Verfahren nach einem der vorherigen Ansprüche,
**dadurch gekennzeichnet,**
**dass** das portable Gerät zumindest zeitweise in Datenverbindung mit einer zentralen Datenverarbeitungseinheit ist, wobei zwischen dem portablen Gerät und der zentralen Datenverarbeitungseinheit maschinenspezifische Belastungswerte und/oder Vibrationsbelastungswerte und/oder Bediendauerwerte bezüglich einer Bedienperson übermittelt werden.

10. Verfahren nach einem der vorherigen Ansprüche,
**dadurch gekennzeichnet,**
**dass** bei Erreichen einer vorgegebenen HAV-Belastung und/oder GKV-Belastung der Bedienperson unterhalb des Gesamtbelastungswertes der Betriebszustand der betreffenden Maschine in der Weise verändert wird, dass die belastenden Vibrationen verringert werden.

11. Portables Gerät zur Durchführung eines Verfahrens gemäß einem der Ansprüche 1 bis 10.

## Claims

1. A method for computer-assisted monitoring of a vibration exposure to which an operator is subjected while operating a processing machine, comprising the method steps of:
a) determining an actual operating duration of a processing machine by the operator,
b) querying a machine-specific exposure value with respect to the processing machine used, an identifier shown in the form of a QR code being permanently attached to the processing machine for this purpose, said querying being performed using a portable device including an optoelectronic reading device,
c) automated calculating of the vibration exposure based on the operating duration and the machine-specific exposure value,
d) outputting a vibration exposure value reflecting the vibration exposure up to a current point, or a value dependent thereon.

2. The method according to claim 1,
**characterized in that**
steps a) to d) are carried out with the aid of a single portable device.

3. The method according to any one of the preceding claims,
**characterized in that**
the actual operating duration is recorded via user inputs, in particular via a user input at the start time and/or end time of processing.

4. The method according to any one of claims 1 or 2,
**characterized in that**
the actual processing duration is automatically recorded by the portable device, in particular based on evaluations of measured values of a vibration sensor attached to the operator or the processing machine.

5. The method according to any one of the preceding claims,
**characterized in that**
the processing machine transmits, in particular wirelessly, dynamic values, in particular information about the operating duration, such as the start time and/or end time, to the portable device.

6. The method according to any one of the preceding claims,
**characterized in that**
the portable device transmits an enable signal to the processing machine as long as a maximum vibration exposure value has not yet been reached, wherein processing using the processing machine is possible exclusively upon detection of the enable signal.

7. The method according to any one of the preceding claims,
**characterized in that**
the output value is a predictive value containing information about the remaining operating duration until reaching the maximum permissible vibration exposure.

8. The method according to any one of the preceding claims,
**characterized in that**
vibration exposures created during processing using different processing machines are summed up to yield a total exposure value.

9. The method according to any one of the preceding claims,
**characterized in that**
the portable device is at least temporarily in data connection with a central data processing unit, wherein machine-specific exposure values and/or vibration exposure values and/or operating duration values relating to an operator are transmitted between the portable device and the central data processing unit.

10. The method according to any one of the preceding claims,
**characterized in that**
when a specified HAV (hand-arm vibration) exposure and/or WBV (whole-body vibration) exposure of the operator below the total exposure value is reached, the operating state of the machine concerned is changed such that the vibrations to which the operator is exposed are reduced.

11. A portable device for carrying out a method according to any one of claims 1 to 10.

## Revendications

1. Procédé de surveillance assistée par ordinateur de l'exposition aux vibrations à laquelle un opérateur est exposé pendant le fonctionnement d'un engin de traitement, comprenant les étapes de procédé suivantes :
a) détermination d'une durée de fonctionnement réelle d'un engin de traitement par l'opérateur,
b) recherche d'une valeur de charge spécifique à l'engin, en relation avec l'engin de traitement utilisé, un identifiant représenté sous la forme d'un QR code étant associé de manière permanente à l'engin de traitement dans ce but, ladite recherche étant effectuée en utilisant un dispositif portable comportant un dispositif de lecture optoélectronique,
c) calcul automatisé de l'exposition aux vibrations sur la base de la durée de fonctionnement et de la valeur de charge spécifique à l'engin,
d) production d'une valeur d'exposition aux vibrations reflétant l'exposition aux vibrations jusqu'à un moment donné, ou d'une valeur qui dépend de celle-ci.

2. Procédé selon la revendication 1,
***caractérisé en ce que***
les étapes a) à d) sont réalisées avec l'aide d'un seul et unique dispositif portable.

3. Procédé selon l'une quelconque des revendications précédentes,
***caractérisé en ce que***
la durée de fonctionnement réelle est enregistrée automatiquement par le dispositif portable via des saisies par l'utilisateur, en particulier via une saisie par l'utilisateur au moment du démarrage et/ou au moment de la fin du traitement.

4. Procédé selon l'une quelconque des revendications 1 ou 2,
***caractérisé en ce que***
la durée de traitement réelle est enregistrée automatiquement par le dispositif portable, en particulier sur la base d'évaluations de valeurs mesurées par un capteur de vibrations fixé sur l'opérateur ou sur l'engin de traitement.

5. Procédé selon l'une quelconque des revendications précédentes,
***caractérisé en ce que***
l'engin de traitement transmet, en particulier sans fil, des valeurs dynamiques, en particulier des informations concernant la durée du fonctionnement, telles que le moment du démarrage et/ou le moment de l'arrêt, au dispositif portable.

6. Procédé selon l'une quelconque des revendications précédentes,
***caractérisé en ce que***
le dispositif portable transmet un signal de validation à l'engin de traitement aussi longtemps qu'une valeur maximale d'exposition à des vibrations n'a pas été atteinte, le traitement en utilisant l'engin de traitement n'étant exclusivement possible qu'à la détection du signal de validation.

7. Procédé selon l'une quelconque des revendications précédentes,
***caractérisé en ce que***
la valeur émise est une valeur prédictive contenant une information au sujet de la durée de fonctionnement restante avant d'atteindre l'exposition maximale aux vibrations permise.

8. Procédé selon l'une quelconque des revendications précédentes,
***caractérisé en* ce *que***
les expositions aux vibrations résultant d'un traitement utilisant différents engins de traitement sont cumulées pour donner une valeur d'exposition totale.

9. Procédé selon l'une quelconque des revendications précédentes,
***caractérisé en ce que***
le dispositif portable est, au moins de manière temporaire, en relation de données avec une unité centrale de traitement de données, les valeurs d'exposition spécifiques à l'engin, et/ou les valeurs d'exposition aux vibrations et/ou les valeurs des durées de fonctionnement concernant un opérateur étant transmises entre le dispositif portable et l'unité centrale de traitement de données.

10. Procédé selon l'une quelconque des revendications précédentes,
***caractérisé en ce que***
lorsqu'une exposition prédéterminée aux vibrations mains-bras et/ou une exposition aux vibrations transmises à l'ensemble du corps de l'opérateur sous la valeur d'exposition totale est atteinte, l'état du fonctionnement de l'engin concerné est modifié de telle sorte que les vibrations auxquelles l'opérateur est exposé sont réduites.

11. Dispositif portable destiné à mettre en œuvre un procédé selon l'une quelconque des revendications 1 à 10.
